# EUROPÄISCHE PATENTSCHRIFT

(11) **EP 3 731 483 B1**
(45) Veröffentlichungstag und Bekanntmachung des Hinweises auf die Patenterteilung: **11.06.2025**
(21) Anmeldenummer: 19405007.6
(22) Anmeldetag: 27.04.2019
(51) Int. Cl.: H04L 9/40

(54) **VERFAHREN ZUR ERZEUGUNG VON DIGITALEN SIGNATUREN**
METHOD FOR GENERATING DIGITAL SIGNATURES
PROCÉDÉ DE GÉNÉRATION DE SIGNATURES DIGITALES

(43) Veröffentlichungstag der Anmeldung: 28.10.2020
(73) Patentinhaber: Fyntra Group, S.A., Panama City (PA)
(72) Erfinder: Prescott, Sean, CH-6430 Schwyz (CH)
(74) Vertreter: Eisenführ Speiser

(56) Entgegenhaltungen:
- US-A1- 2005 182 956

## Beschreibung

Die vorliegende Erfindung befasst sich mit dem Einsatz und der Weiterentwicklung der sicheren Speicherung von digitalen Vermögenswerten und der sicheren Durchführung von elektronischen Signatur-Prozessen. Die vorliegende Erfindung betrifft insbesondere die Speicherung von Crypto-Währungen und Tokens d.h. Speicherung der Zugriffberechtigung für Einträge in einer öffentlichen oder privaten Datenbank (insbesondere in Transaktions-Systemen wie der Blockchain), wo jeder Eintrag ausschließlich, einzigartig und nicht vervielfältigbar und nicht grundsätzlich fälschbar ist. Derartige Zugriffberechtigungen werden insbesondere durch den Einsatz von asymmetrischen kryptografischen Verfahren, welche in der Regel aus einem Paar von privatem und öffentlichem Schlüssel (private/public key pair) bestehen implementiert. Zur Übertragung der Berechtigung an einem Token in einer solchen Datenbank (wie der Blockchain) wird eine Transaktion in der Weise initiiert, dass entsprechend dem jeweiligen Software Protokoll der Datenbank/Blockchain ein Transactions-Skript erstellt wird und dieses mit dem privaten Schlüssel (private key) mit einer elektronischen Signatur (digital signature) versehen wird und dann an die Datenbank d.h. in der Regel das Blockchain Netzwerk gesendet wird. Die Gültigkeit der digitalen Signatur oder der Transaktion oder der Interaktion (Veränderung des Zustands/state change z.B. eines smart contracts) kann mit Hilfe des in der Datenbank/Blockchain öffentlich zugänglichen öffentlichem Schlüssel überprüft werden. Ist die digitale Signatur gültig findet in der Regel eine Übertragung des Tokens auf einen anderen öffentlichen Schlüssel statt und fortan kann derjenige (oder diejenige Software welche zu diesem Zweck eingesetzt wird), welche(r) im Besitz des dazugehörigen privaten Schlüssels ist über diesen Token verfügen.

Die erste Implementierung einer Blockchain war diejenige der "kryptografischen" Währung "Bitcoin"., dieses System besteht im Wesentlichen aus einem Zahlungssystem und einer Form einer "Geldeinheit", welche dezentral mithilfe eigener Software geschöpft und verwaltet wird und jede Person mit Zugang zum Internet mit seinem eigenen Rechner Teil des Bitcoin-Netzwerkes werden kann. Die dabei verwendete dezentrale Datenbank (die Blockchain) speichert sämtliche Transaktionen und ist öffentlich für jedermann einsehbar und durch kryptographische Verfahren fälschungssicher ausgestaltet. Die dadurch geschaffene Transparenz erlaubt die Anwendung der Blockchain-Technologie auch für andere Formen von digitalen Registern, z.B. im öffentlichrechtlichen Bereich für öffentlich geführte Register wie das Handelsregister. Besonderem Interesse gilt insbesondere der Tokenisierung (auch Tokenization) bei welcher Rechten oder Forderungen in Token anstelle von Urkunden verkörpert werden (z.B. in der Ethereum Blockchain). Die vorliegende Erfindung betrifft insbesondere die Speicherung der Zugriffberechtigung für derartige Tokens oder von "kryptografischen" Währungen wie Bitcoin und kann für sämtliche ähnliche implementierte Systeme, bei welchen ein privater Schlüssel zur Signatur verwendet wird, eingesetzt werden.

Derartige Systeme werden häufig Wallets (virtuelle Geldbeutel) genannt, welche die Verwaltung von (in der Regel diversen) private/public key paaren und der sicheren Verwahrung der privaten Schlüssel dienen und weitere Funktionen wahrnehmen wie z.B. die passenden public keys für eine Transaktion auswählen, wenn die Transaktion nicht mit einem public key alleine ausgeführt werden kann und z.B. die Transaktions-Scripte vorbereiten.

Derartige Wallet-Systeme werden in der Regel zwischen Cold-Wallet und Hot-Wallet Systemen unterschieden. Cold-Wallet Systeme bezeichnen dabei Lösungen, bei welchen der private Schlüssel (private key) and einem Ort oder auf einem Gerät verwahrt, welcher nicht mit dem Internet verbunden ist ("Air Gap"). Der Vorteil dieser Lösungen ist die erhöhe Sicherheit z.B. vor Angriffen (Hacker angriffe) oder fehl Konfigurationen welche unbefugten einen Zugriff zu den gespeicherten privaten Schlüsseln erlaubt. Nachteilig ist bei diesen Systemen insbesondere der manuelle Aufwand eine Transaktion mit z.B. einer digitalen Signatur zu versehen weshalb eine durchgehende Prozess Automatisierung nicht möglich ist und ein Medienbruch erfolgt: Typischerweise muss ein Mensch den privaten Schlüssel auf die mit einer digitalen Signatur zu versehende Zeichenfolge (in der Regel das Transaktions-Skript) anwenden. Dies macht es unpraktikabel für industrielle Anwender, wie z.B. Börsen/Handelsplätze für Tokens und/oder Kryptowährungen oder Unternehmen, welche derartige private Schlüssel im Auftrag ihrer Kunden verwahren (Custodians genannt), für jeden einzelnen Kunden ein eigenes public/private key paar zu nutzen. Stattdessen werden die Tokens in "Sammelwallets" (welche die Tokens diverser Kunden letztlich vermögensrechtlich "vermischen") verwahrt, in welchen die Unternehmen die Tokens zahlreicher Kunden in einem private/public key paar speichern. Aufgrund der Tatsache, dass die meisten Blockchain Lösungen öffentliche Blockchains sind können public keys mit einer hohen Anzahl an Tokens/Kryptowährungen leicht ausfindig zu machen. Dies führt nicht nur dazu, dass diese ein lohnenswertes Ziel für Angreifer darstellen, sondern hat mindestens zwei weitere gravierende Nachteile:
1. Werden große, d.h. grösser als üblich, Transaktionen durchgeführt kann dies zu Spekulationen und Kurzverwerfungen an den Handelsplätzen führen da eine Aufteilung der Transaktion auf eine Vielzahl von public keys (und damit für außenstehende nicht anvertraut wurde), nicht kennt, können z.B. Falle von Veruntreuung oder nicht bekanntgemachte erfolgreiche Diebstahle von Hackern nicht zeitnah oder überhaupt erkannt werden. In jüngster Vergangenheit hat insbesondere die Insolvenz der kanadischen Krypto Börse QuadrigaCX fur Schlagzeilen gesorgt, bei welcher der Insolvenzverwalter Ernst and Young zu dem Ergebnis gekommen ist, dass die cold wallets von QuadrigaCX leer waren.
3. Ein weiteres Problem mit Cold-Wallets liegt darin, dass bevor eine Transaktion erstellt werden kann, eine Cold-Wallet zuerst jeweils synchronisiert werden muss, da die Software der Cold-Wallet die jeweils aktuellen Informationen der jeweiligen Blockchain zunächst vorliegen haben muss um die passenden public keys fur eine Transaktion zu bestimmen. Die kostet zusätzlich Zeit bevor eine Transaktion tatsachlich ausgeführt werden kann und stellt ein Sicherheitsrisiko dar, da die ColdWallet zu diesem Zweck bis zum Abschluss der synronisation und dem absenden der Transaktion mit dem Internet verbunden sein muss.

Hot-Wallets hingegen sind Wallets, bei welchen der private Schlüssel auf einem mit dem Internet verbundenen Gerat gespeichert ist. Diese Wallets lösen das Medienbruchproblem und erlauben quasi die sofortige Durchführung einer Transaktion, da auf den private Schlüssel zur Erstellung der digitalen Signatur (oder sonstigen Interaktion) automatisiert zugegriffen werden kann. Diese Wallets haben den Nachteilen der deutlich höheren Angreifbarkeit durch Hacker oder auch bei Fehlkonfigurationen oder implementierungsfehlern in der Software der Hot-Wallet. In der industriellen Anwendung z. B. bei Krypto Börsen werden auch diese Hot-Wallets als Sammelwallets betrieben d.h. der einzelne Kunde kann auch hier nicht sicherstellten, dass die Gesamtsumme an in diesen Wallets gespeicherten tokens demjenigen Betrag entspricht, welche die Krypto Börse entsprechend der Gesamtheit ihrer Kunden halten sollte.

Verschiedene Ansätze für derartige Wallets bzw. zum Speichern von private/public paaren werden beispielsweise in den folgenden Dokumenten des Standes der Technik beschrieben:
- METHOD OF MAKING, SECURING, AND USING ACRYPTOCURRENCY WALLET, United States Patent Application Publication, Pub. No.: US 2015/0227897 A1 Richard Kennard, Robert Steele: "Application of Software Mining to Automatic User Interface Generation";
- DATA ANALYTIC AND SECURITY MECHANISM FOR IMPLEMENTING A HOT WALLET SERVICE, United States Patent, Patent No.: US 9,672.499 B2; und
- METHOD AND SYSTEM FOR SECURING CRYPTOCURRENCY WALLET, Patent Application Publication, Pub. No.: US 2016/0071096 A1.

US 2005/0182956 A1 skizziert, dass Dokumente und andere Gegenstände auf elektronischem Wege vom Absender zum Empfänger geliefert werden können, und zwar mit einem Vertrauensniveau, das dem eines persönlichen Dokumentenkuriers nahekommt oder es sogar übertrifft. Ein vertrauenswürdiger elektronischer Vermittler kann Transaktionen validieren, bezeugen und/oder archivieren, während er in einigen Fällen aktiv an der Transaktion teilnimmt oder diese leitet. Gedruckte oder abgebildete Dokumente können mit handschriftlichen Unterschriften, Siegelbildern, elektronischen Fingerabdrücken, Wasserzeichen und/oder Steganografie gekennzeichnet werden. Elektronische kommerzielle Transaktionen und Übertragungen finden in einer zuverlässigen, "vertrauenswürdigen" virtuellen Vertriebsumgebung statt, die den Nutzern erhebliche Effizienz- und Kosteneinsparungsvorteile bietet und darüber hinaus ein extrem hohes Maß an Vertrauen und Vertrauenswürdigkeit vermittelt. Die Systeme und Techniken sind vielseitig einsetzbar, unter anderem für die sichere Zustellung von Dokumenten, die Ausfertigung von Rechtsdokumenten und den elektronischen Datenaustausch (EDI).
- METHOD AND SYSTEM FOR SECURING CRYPTOCURRENCY WALLET, Patent Application Publication, Pub. No.: US 2016/0071096 A1.

Das Problem, dass der private Schlüssel sicher auf einem Gerät gespeichert werden muss, welches keine Verbindung zum Internet hat, dieses System beliebig skalierbar ist d.h. beliebig viele private/public key paare gespeichert werden können (d.h. es keine Notwendigkeit für Sammel-Wallets mehr gibt) und trotzdem ein vollständig automatisierter Prozessablauf möglich ist und damit Transaktionen mit einer vergleichbaren Geschwindigkeit wie bei Hot-Wallets signiert werden können, soll die vorliegende Erfindung lösen. Ferner löst die Erfindung das Problem, dass bevor eine Transaktion mit einer "Cold-Wallet" signiert werden kann, die Struktur der Transaktion und den dazugehörigen Public Keys automatisch und korrekt generiert wird. In dem die jeweils aktuellen (Blockchain-)Daten, welche bei herkömmlichen Cold-Wallets erst synchronisiert werden müssen, innerhalb des Wallets-Systems stets aktuell vorgehalten werden.

Eine Aufgabe der Erfindung ist daher das Bereitstellen eines Verfahrens, welche die Speicherung der privaten Schlüssel auf nicht mit dem Internet verbundenen Speicherplätzen möglich ist, aber diese privaten Schlüssel trotzdem zur Erstellung einer digitalen Signatur in einem vollständig automatisierten Prozess zugreifbar sind.

Eine besondere Aufgabe der vorliegenden Erfindung ist es, ein solches Verfahren bereitzustellen, das es ermöglicht, beliebig viele private/public key paare in der Weise zu speichern, dass der private key auf nicht mit dem Internet verbundenen Geräten gespeichert ist.

Eine weitere Aufgabe der Erfindung ist das Bereitstellen eines solchen Verfahrens, das die Kommunikation zwischen einer per Internet (oder vergleichbarem zumindest teilweise öffentlichem Netzwerk = nicht vollständig privatem Netzwerk) zugänglicher Benutzerschnittstelle oder Programmierschnittstelle (application programming interface; API) über welche der Benutzer eine Transaktion initiiert (z.B. ein Kunde eines Handelsplatzes möchte einen Token senden), eine mit einer digitalen Signatur zu versehende Zeichenfolge (z.B. ein transaktions Skript) in eine Warteschlage (queue), Datenbank einträgt oder über eine andere Schnittstelle überträgt, auf welche ein sich in einer sicher Umgebung wie einer Demilitarisierten Zone (Demilitarized Zone; DMZ) befindliche Software zugreifen kann und diese Software zudem auf eine Warteschlage (queue), Datenbank einträgt oder über eine andere Schnittstelle Zugriff in ein vollständig privates Netz hat und die vorliegenden Aufträge in diese hinein überträgt. Wobei die Daten in der Weise verschlüsselt werden, dass diese nur innerhalb des privaten Netzwerks wieder entschlüsselt werden können.

Eine weitere Aufgabe der Erfindung ist das Bereitstellen eines solchen Verfahrens, welches automatisierte eine isolierte und im nicht-aktiven Modus befindliche gekapselte Umgebung, z.B. eine virtuelle Maschine (Virtual Machine; VM), welche über keine Internetverbindung verfügt, startet, welche in der Lage ist, eine digitale Signatur mithilfe eines privaten Schlüssels zu erstellen und die Signatur an eine andere Software zu übertragen, in den Fällen zu starten, wenn diese den notwendigen privaten Schlüssel enthält oder auf diesen zugreifen kann. Diese Umgebung befindet sich in einem privaten Netzwerk ohne Verbindung zum Internet. Innerhalb dieser Umgebung übernimmt ein Softwaresystem die Kontrolle über das starten und stoppen der gekapselten Systeme und kann Befehle auf innerhalb dieser Umgebung ausführen.

Eine weitere Aufgabe der Erfindung ist das Bereitstellen eines solchen Verfahrens, welches automatisierte eine isolierte und im nicht-aktiven Modus befindliche gekapselte Umgebung, z.B. eine virtuelle Maschine (Virtual Machine; VM), welche nur dann aktiviert wird, wenn diese zur Vorbereitung einer Transaktion benötigt wird. Weiterhin werden diesen gekapselten Umgebungen eine lokale Kopie (idealerweise über eine VM welche die lokalen Daten bereithält und sich auf dem gleichen Storage System wie die aufzuweckenden VM befindet) der jeweiligen (Blockchain-)Protokoll-Datensätze zur Verfügung gestellt, um zeitaufwendige Synchronisation überflüssig zu machen. Über diese gekapselte Umgebung übernimmt ein Softwaresystem die Kontrolle zum Starten und Stoppen der gekapselten Systeme und kann Befehle innerhalb dieser gekapselten Umgebung ausführen.

Eine weitere Aufgabe der Erfindung ist das Bereitstellen eines solchen Verfahrens, dass eine Software auf einem System auf welchem sich ein Queue-System/Datenbank-Server/Interface befindet und welches sich innerhalb des privaten Netzwerks befindet eine VPN-Verbindung zu einem System innerhalb der DMZ aufbaut, damit das System innerhalb der DMZ über diese Verbindung nach Aufträge zur digitalen Signatur prüfen kann und Rückantworten (insbesondere signierte Transaktion) von diesem abrufen kann. Wobei dieses System innerhalb der DMZ mit einer weiteren Datenbank kommunizieren kann, welche sich auf der offenen Seite (d.h. dem nicht-private Netzwerk) befindet und dort ebenfalls anstehende Aufträge und Rückantworten übertragen kann.

Eine weitere Aufgabe der Erfindung ist das Bereitstellen eines solchen Verfahrens, dass Daten, welche von der offenen Seite (d.h. dem nicht-private Netzwerk) zu dem privaten Netzwerk übertragen werden, mit einem intern verwendete public key verschlüsselt werden, dass diese Daten nur auf der bestimmungsgemäßen virtuellen Maschine wieder durch einen dort gespeicherten internen private key entschlüsselt werden können.

Eine weitere Aufgabe der Erfindung ist das Bereitstellen eines solchen Verfahrens, dass der private key, welcher zur digitalen Signatur benötigt wird, auf einem gekapselten System gespeichert wird und dieser mit einem individuellen Passwort des Berechtigten an dieser wallet als (Teil-)Schlüssel verschlüsselt wird.

Eine weitere Aufgabe der Erfindung ist es, die Verifizierbarkeit der Token Bestände auch durch Dritte von Innen und Aussen zu gewährleisten, indem die public/private keys in segregierten und getrennten Umgebungen gespeichert werden und durch individuelle Berechtigungsmechanismen geschützt sind.

Eine weitere Aufgabe der Erfindung ist das Bereitstellen einer Verfahrensvariante, dass der private key, welcher zur digitalen Signatur benötigt wird, auf einem gekapselten System gespeichert wird und dieser mit einem Schlüssel (erfindungsgemäß "Master File" genannt) verschlüsselt wird, welcher seinerseits mit einem individuellen Passwort der wallet des Berechtigten als (Teil-)Schlüssel verschlüsselt wird. Dies erlaubt die Verschlüsslung diverser private keys für verschiede Protokolle (beispielsweise Bitcoin, Bitcoin Cash, Ethereum etc.) mit einem einheitlichen "Master File" wobei im Falle einer Passwortänderung nur dieses "Master File" mit dem geänderten Passwort neu verschlüsselt werden muss und nicht sämtliche private keys der einzelnen zu verschiedenen (Blockchain-)Protokollen gehörigen wallets.

Die der Erfindung zugrundeliegende Technologie basiert darauf, die bestehenden Nachteile, durch die Kombination von den Merkmalen einer Cold-Wallet (private keys nicht auf einem aktiven logischen System und ohne Internetverbindung auf diesem logischen System), insbesondere was die Sicherheit betrifft, mit den Vorteilen einer Hot-Wallet was die Prozess Automatisierung und damit Geschwindigkeit mit welcher digitale Signaturen erstellen werden können, betrifft, zu beseitigen.

Ferner basiert die zugrundeliegende Technologie darauf, die bestehenden Nachteile, dass die zivilrechtlich Berechtigten an den Token für gewöhnlich dem Wallet-Betreiber (Crypto-Börse, Custodian etc.) vertrauen müssen, dass ihre Token sich tatsächlich noch in den Wallets des Betreibers befinden und dieser diese Token (bzw. welche Funktion durch Signierung mit dem passenden private key jeweils Verbunden sein mag) auf Verlangen herausgeben wird bzw. die gewünschte Aktion ausgeführt wird, zu beseitigen. Dazu ermöglicht die Erfindung die segregierte Speicherung von beliebig vielen public/private key Paaren verschiedener (Blockchain-)Protokolle und ermöglicht dem Berechtigten so diese selbst unabhängig vom Betreiber in der jeweiligen Blockchain zu verifizieren.

Weiterhin basiert zugrundeliegende Technologie darauf, die bestehenden Nachteile, dass Wallet-Betreiber bzw. deren Mitarbeiter in der Lage sind, ohne Zutun des zivilrechtlich Berechtigten deren Tokens bzw. private keys zu verwenden und beispielsweise deren Bitcoin veruntreuen können, zu beseitigen, indem ein nur dem Kunden (oder eines von diesem entsprechend damit betrauten Dritten) bekannter Teil, Teil desjenigen Schlüssels ist, welcher letztlich zur Entschlüsselung des private keys notwendig ist.

Zusätzlich basiert zugrundeliegende Technologie darauf, trotz dem vorliegen von segregierten private/public key Paaren pro zivilrechtlich Berechtigtem und dem Vorliegen von segregierten - konkret als virtuelle Maschinen gekapselte - Umgebungen, der Ressourcenverbrauch durch die nur bedarfsgesteuerte Aktivierung dieser virtuellen Maschinen minimiert wird.

Die Erfindung beinhaltet einen Prozess zu der Erzeugung von Digitalen Signaturen mit der erfindungsgemäßen Wallet und einen damit verbundenen Prozess zur Erstellung einer solchen erfindungsgemäßen Wallet und des Wallet-Systems.

Als Endergebnis erlaubt die erfindungsgemäße Technologie die für Cold-Wallet Lösungen bestehenden praktischen Limitierungen in der Anzahl an unterschiedlichen Private/Public Key paaren (insbesondere im Massenkundengeschäft) ebenso zu eliminieren wie was den Medienbruch durch die Notwendigkeit manuellen menschlichen Eingriffs angeht und erlaubt damit das Speichern von großen Mengen an Privat/Public Key Paaren in einem sicheren coldstorage Umfeld in segregierten Umgebunden ohne jedoch die für hot-wallet Lösungen typischen Sicherheitsdefizite. Ferner erlaubt die erfindungsgemäße Technologie in ihrer bevorzugten Ausführungsform, den privaten Schlüssel (private key) einer Wallet mit einem nur dem Berechtigten oder einem von diesem bestimmten Dritten bekannten Teil-Schlüssel zu verschlüsseln, um auch dem Anbieter der Wallet-Lösung einen Zugriff auf den zur digitalen Signatur Erzeugung notwendigen private key ohne diesen Teil-Schlüssel zu verwehren. Damit erlaubt die Erfindung in der Verbindung mit den für jeden Wallet Berechtigten segregierten Private/Public-Key paar Fälle von z.B. Veruntreuung durch den Wallet Dienstanbieter zu verhindern und dem Wallet Berechtigten die jederzeit vom Dienstanbieter unabhängige Verifizierung seiner ihm zuzurechnenden Tokens, Crypto-Währungen etc.

Die bevorzugte Ausführungsform des Prozesses (100) beinhaltet folgende Hauptkomponenten:
- Ein **nicht privates** Computernetz (z.B. mit dem Internet verbundene Server, welche eine Benutzer- oder Programmierschnittstelle über das Internet bereitstellen)
- Ein **nicht öffentliches** Computernetz d.h. ein Computernetz welches getrennt von nicht-privaten Netzwerken wie dem Internet ist
- Eine Demilitarisierte Zone (DMZ, auch Demilitarized Zone) d.h. ein Computernetz mit sicherheitstechnisch kontrollierten Zugriffsmöglichkeiten auf die daran angeschlossenen Systeme wobei die in der DMZ aufgestellten Systeme durch eine oder mehrere Sicherheitssysteme (wie z.B. Firewalls, VLANs, etc.) gegen andere Netze (z. B. Internet, LAN) abgeschirmt sind (Isolation der DMZ Systems gegenüber zwei oder mehr Netzen).
- Erweiterte Definition «Nicht-Öffentliches Netzwerk» (NÖN): NÖN ist entgegen einem öffentlichen Netzwerk als Verbund von diversen privaten Netzwerken zu verstehen. In einem NÖN ist eine Trennung von puren öffentlichen Netzwerken und komplett isolierten Netzwerken zu verstehen, denn als Teil des NÖN können auch demilitarisierte Zonen (DMZ), VPN Verbunde und andere, eben nicht öffentliche Netzwerke verstanden werden.
- Erweiterte Definition «Nicht-Privates Netzwerk» (NPN): Ein NPN, entgegen einem NÖN unterscheidet die Schnittkomponenten eines Systemnetzwerkes, welche überlappend ggf. eine Verbindung von aussen nach innen ermöglichen. Als Beispiel hierfür und relevant für die Patentanmeldung, wäre dass die DMZ wohl aus dem Nicht-Privaten Netzwerk Daten/Nachrichten/Informationen empfängt und an das Nicht-Öffentliche Netzwerk und dessen Verbund weiterleitet.
- Eine Software, welche sich in einem **nicht privaten** Netzwerk befindet, erfindungsgemäß **"Front-End/API"** genannt
- Ein **intern** innerhalb des erfindungsgemäßen Systems genutztes private-public-key Paar, erfindungsgemäß **"internal public key"** und **"internal private key"** genannt
- Ein private-public-key Paar, welches für **externe** Transaktionen bestimmt ist, erfindungsgemäß **"external public key"** und **"external private key"** genannt (z.B. private/public key pair der bitcoin blockchain)
- Eine nicht innerhalb des erfindungsgemäßen Systems bekannte (d.h. dort insbesondere nicht gespeicherte) Zeichenfolge, welche für jede Transaktion von einer Quelle **außerhalb** des erfindungsgemäßen Systems bereitgestellt werden sollte, erfindungsgemäß **"Master Password"** genannt.
- Eine Schnittstelle innerhalb des nicht privaten Netzwerks (in dieser Ausführungsform ein Datenbank System) erfindungsgemäß **"Front**-side Database" genannt.
- Eine Schnittstelle welche den ***"internal*** public key" der "Front-End/API" Software bereitstellt.
- Ein gekapseltes System (z.B. eine virtuelle Maschine/Container), auf welchem sich diejenige Software befindet, welche notwendig ist, um die zu signierende Transaktion zu erstellen, erfindungsgemäß **"Online Wallet"** genannt.
- Eine Software - erfindungsgemäß **"Public** Wallet Controller" genannt - welche die gekapselten "Online Wallet" Systeme aktivieren und deaktivieren kann und auf diesen **"Online** Wallet" befehle ausführen kann und welche auf die "Front-side Database" zugreifen kann (in der bevorzugten Ausführungsform durch regelmäßige abfragen der Datenbank).
- Ein gekapseltes System (z.B. eine virtuelle Maschine/Container), welches sich innerhalb des nicht öffentlichen Netzwerks befindet - erfindungsgemäß **"Offline Wallet"** genannt - und auf welchem sich diejenige Software und Daten befinden, welche notwendig sind, um
   ∘ Daten welche mit dem "internal public key" verschlüsselt sind zu entschlüsseln
   ∘ Mit Hilfe das "Master Password" (dessen Hashwert) denjenigen Schlüssel zu entschlüsseln (erfindungsgemäß **"Master file"** genannt) mit welchem die "external privat keys" verschlüsselt sind.
   ∘ Den "External Privat Keys" mit dem "Master file" zu entschlüsseln
   ∘ Die digitalen Signaturen mit den "External Privat Keys" zu erzeugen.
- Eine Schnittstelle innerhalb des nicht öffentlichen Netzwerks (in dieser Ausführungsform ein Datenbank System) erfindungsgemäß **"Back**-side Database" genannt.
- Eine Software - erfindungsgemäß **"Private** Wallet Controller" genannt - welche die gekapselten "Offline Wallet" Systeme aktivieren und deaktivieren kann und auf diesen "Offline Wallet" befehle ausführen kann und welcher auf die "Back-side Database" zugreifen kann (in der bevorzugten Ausführungsform durch regelmäßige abfragen der Datenbank)
- Eine Software - erfindungsgemäß **"DMZ Controller"** - genannt, welche sich in einer mit gängigen Sicherheitsvorkehrungen (Firewalls, Intrusion Detection Systems etc.) abgesicherten Umgebung (demilitarisierte Zone) befindet, welche auf die "Front-side Database" zugreifen kann (in der bevorzugten Ausführungsform durch regelmäßige abfragen der Datenbank) und zu welchem von dem System der "Back-side Database" aus eine VPN Verbindung aufgebaut wird, wodurch der "DMZ Controller" in die Lage versetzt wird, auf die "Back-side Database" ebenfalls zuzugreifen und so als Brücke fungiert.

In einer bevorzugten Ausführungsform, deren wesentliche Kompetenten vorstehend aufgelistet sind, sind die "external private keys", beispielsweise private keys für verschiedene (in der Regel Blockchain-)Protokolle (z.B. bitcoin, bitcoin cash, weitere hard/soft forks, klone, oder Erweiterungen der Bitcoin Blockchain etc.) auf gekapselten Systemen (z.B. als Virtueller Maschine/Container in der bevorzugten Ausführungsform) auf einem Verteilten System/Cluster System (andere verteilte Systeme oder dezentralisierte System sind erfindungsgemäß ebenso möglich zu verwenden) mit Anbindung an ein Storage Cluster (z.B. ein Network Attached Storage; NAS oder auch Cloud Speicher) gespeichert, was eine Skalierbarkeit des Systems sicherstellt.

Die "external private keys" werden auf diesen virtuellen Maschinen in der Weise verschlüsselt gespeichert, dass ein individuelles "Master File" für jedes Protokoll (z.B. Bitcoin, Bitcoin Cash etc.) verwendet wird, mit welchem der jeweilige "external privat key", für das jeweilige Protokoll verschlüsselt ist. Das "Master File" ist seinerseits ebenfalls verschlüsselt wobei der Hashwert des "Master Password" als (Teil-)Schlüssel dafür verwendet wird. Diese Ausführungsform - welche einen Input von außerhalb des Systems benötigt, das genannte "Master Password", macht es auch für den Betreiber des Erfindungsgemäßen Systems unmöglich, ohne diesen das "Master File" oder den "external private key" zu entschlüsseln und damit digitale Signaturen mit den "external private keys" zu erstellen und stellt so einen Schutz z.B. vor kriminell handelnden Mitarbeitern dar. Die Verwendung eines "Master File" welcher unter anderem mit den Hashwert des "Master Password" verschlüsselt ist, erhöht zum einen die Sicherheit des für die Verschlüsselung des "external private keys" genutzten Schlüssels und steigert die Effizienz des Systems in der Weise, dass im Falle einer Änderung des "Master Password" nur die "Master Files" neu verschlüsselt werden müssen, aber nicht jeder der "external private keys", wobei zusätzlich der sicherheitstechnische Vorteil besteht, dass die Länge des eigentlichen Entschlüsselungsstrings (und damit die Schwierigkeit diesen zu ermitteln) auch bei schwachen z.B. kurzen oder leicht zu erratenden "Master Password"'s sichergestellt ist.

Eine erste **beispielhafte Ausführungsform** des erfindungsgemäßen Verfahrens bezieht sich auf die Speicherung von kryptografischen Währungen oder Token auf einer Handelsplattform für digitale Vermögenswerde (Crypto Exchange oder Custodian) auf welche ein End-Benutzer über das Internet auf einen Web-Server per verschlüsselter Verbindung zugreift und in einen geschützten (mindestens ein, bevorzugt zwei oder mehr Faktor Authentifizierung) Bereich zugreift und dort seinen Bestand an digitalen Vermögenswerten und die dazu gehörigen (und nur diesem Kunden zugehörigen) public keys einsehen kann und damit den darin enthaltenen Bestand an Token z.B. seine Bitcoin über die öffentliche Blockchain selbst und damit unabhängig von der Handelsplattform verifizieren kann.

In dieser Ausführungsform wird in dem Fall, wenn der Benutzer eine wie auch immer geartete Transaktion von diesen bei der Handelsplattform verwahrten Tokens ausführen will (z.B. eine "Abhebung"/"Withdraw" oder eine Interaktion mit Smart Contracts wie die Teilnahme an einem Voting-Verfahren) eine Verbindung von dem Web-Server (auf welchen der Endbenutzer zugreift) zu einem logisch gentrennten System, dem "Front-End/API" aufgebaut und eine Anfrage an diese Richtet (eine Trennung ist sicherheitstechnisch bevorzugt aber für die Erfindung nicht zwangsläufig notwendig, sie stellt jedoch die bevorzugte Ausführungsform dar). Das "Front-End/API" liefert dem Web-Server daraufhin - neben weiteren Daten - einen Schlüssel, mit welchem der Web-Server die Daten der weiteren Kommunikation zu verschlüsseln hat (erfindungsgemäß **"random seed"** genannt). Nachdem der Endbenutzer in dieser Ausführungsform sein "Master Passwort" eingegeben hat, wird daraus ein Hashwert berechnet und dieser mit dem "random seed" Kundenseitig (Client-Side im Browser) verschlüsselt, ehe es an den Web-Server übertragen wird und von dort an das "Front-End/API" System gesendet wird.

Auf dem "Front-End/API" System wird der mit dem "random seed" verschlüsselte Hashwert des "Master Password" entschlüsselt und dann wird das "Master Password" sowie die Transaktionsanforderung inkl. der dazugehörigen Daten direkt mit dem "Internal Public Key" verschlüsselt. Der verschlüsselte Hashwert des "Master Password" wird dann mit der "Front-side Database" auf Übereinstimmung (genauer dessen Hashwerte) überprüft und im Falle einer positiven Übereinstimmung werden die mit dem "Internal Public Key" verschlüsselten Daten in die "Front-Side Database" geschrieben.

Der "Public Wallet Controller" prüft in regelmäßigen Abständen, ob in der "Front-Side Database" neue abzuarbeitende Transaktionen vorliegen, ist dies der Fall, wird die dazu passende virtuelle Maschine ("Online Wallet") gestartet und die Wallet Software wird über eine ebenfalls als virtuelle Maschine betriebene lokale Kopie der jeweiligen Blockchain synchronisiert (der "Public Wallet Controller" kann auch unabhängig von konkreten Signierungs-Aufträgen die jeweiligen Wallets zwischen synchronisieren sofern diese Funktion aktiviert ist). Ohne auf diese Weise ständig synchron gehaltenen Wallet-Zustände wäre es häufig nicht möglich die konkrete Transaktion zusammenzusetzen da z.B. im Falle einer Bitcoin Transaktion nicht bekannt wäre, wie diese zusammengestellt werden sollte, da die Salden (balances) der involvierten public keys unbekannt bzw. nicht aktuell wären, was später zu einer Zurückweisung (rejection wegen double-spend oder anderen Validierungsgründen) innerhalb des (Blockchain-)Protokoll-Netwerks (in diesem Beispiel dem Bitcoin Netzwerk)) führen würde. Auf dieser virtuellen Maschine werden sodann die später zu signierenden Daten (z.B. ein transaktions skript) erstellt, wobei der "Public Wallet Controller" die notwendigen Befehle auf dieser virtuellen Maschine ausführt (z.B. per SSH oder Fernzugriff, Remote-Access etc.). Die zu signierenden Daten werden sodann in die "Front-side Database" übertragen.

Diese Datenbank ("Front-side Database") wird von dem "DMZ Controller", welcher sich wie der Name bereits andeutet innerhalb einer DMZ befindet, regelmäßig nach vorliegenden Aufträgen abgefragt. Liegt ein Auftrag in der "Front-side Database" vor, überträgt der "DMZ Controller" die vorliegenden Auftragsdaten in eine Datenbank im privaten Netzwerk ("Back-side Database"). In der bevorzugten Ausführungsform wird die notwendige Kommunikationsverbindung zwischen dem privaten Netzwerk und dem "DMZ Controller" aus dem privaten Netzwerk heraus in Form einer VPN-Verbindung aufgebaut (Verbindungen vom privaten Netzwerk zur DMZ können nur vom privaten Netzwerk aus per VPN - oder anderem sichereren Kommunikationskanal wie einer dedicated line etc. - aufgebaut werden, ein Zugriff auf ein System im privaten Netzwerk von der DMZ aus sind in der bevorzugten Ausführungsform nicht erlaubt).

Innerhalb des privaten Netzwerks prüft eine "Private Wallet Controller" genannte Software ob zu signierende Aufträge in dieser im privaten Netzwerk befindlichen Datenbank (in anderen Ausführungsformen sind auch andere Systeme zum Vorhalten von Aufträge anstelle einer Datenbank Möglich) vorliegen. Ist dies der Fall, d.h. liegen unbearbeitete Aufträge vor, überträgt der "Private Wallet Controller" diese Anfrage in seinen Speicher und startet das zu der jeweiligen Wallet/Kunden gehörende gekapselte System, in der bevorzugten Ausführungsformeine im Schlafzustand (Hibernate) befindliche virtuelle Maschine. Hierbei handelt es sich um unterschiedliche virtuelle Maschinen oder Containern welche anfangs des Prozesses vom "Public Wallet Controller" auf der "Hot" Seite des Gesamtsystems gestartet wurden, um die unsignierten Transaktionsdaten zu erstellen.

Diese Ausführungsform mit den virtuellen Maschinen reduziert den Ressourcen Verbrauch und Energiebedarf dadurch, dass die gekapselten Systeme nur dann gestartet werden, wenn diese tatsächlich benötigt werden und zugleich erlaubt diese Implementierung einen schnellen Zugriff da lediglich der Zustand der gekapselten Umgebung in den flüchtigen Speicher (RAM) geladen werden muss. Nachdem die gekapselte Umgebung aktiv ist, werden die Daten des jeweilige Auftrags (regelmäßig das Transaktions-Skript und das Master-Passwort, beides mit dem "internal Public Key" verschlüsselt) nach der Übertragung entschlüsselt, in einem ersten Schritt wird das "Master-Passwort" mit dem zu dieser Wallet gehörigem "Internal Private Key" auf der virtuellen Maschine entschlüsselt sowie in einem zweiten Schritt wird mit Hilfe des "Master-Passworts" das "Master File" entschlüsselt sowie in einem dritten Schritt mit Hilfe des "Master File" der zu der beabsichtigten Transaktion gehörenden External Private Key" (z.B. im Falle einer Bitcoin Transaktion den Bitcoin private key) entschlüsselt und der "Private Wallet Controller" führt die notwendigen Befehle (per SSH, auch andere Ausführungsvarianten sind möglich) auf der virtuellen Maschine aus um die notwendige digitale Signatur dem Transaktions-Skript (entsprechend des jeweiligen Protokolls z.B. von der Bitcoin Blockchain) hinzufügen.

Die erfolgreich digital signierte Transaktion wird von dem "Private Wallet Controller" zurück in die Datenbank ("Back/side Database") im privaten Netzwerk übertragen. Die gekapselte Umgebung wird nach Abschluss der Transaktion oder nach Erreichen einer zeitlichen Befristung (Timeout) oder aufgrund einer anderen Ressourcen-Relevanten Logik wieder in den Schlaf zustand (hibernate) versetzt. Liegt in der "Back-side Database" eine signierte Transaktion vor, wird diese vom dem "DMZ Controller" aus der "Back-side Database" gelesen und zurück in die Datenbank, welche sich in dem mit dem nicht-privaten Netzwerks befindet ("Front-side Database"), übertragen. Der "Public Wallet Controller" prüft die "Front-side Database" ebenfalls nach erfolgreich signierten Transaktion und - sollte eine solche Vorliegen - startet die dazugehörige virtuelle Maschine und überträgt die Transaktion auf diese (oder an einen dedizierten Transaction-Broadcasting Service) und führt hier ebenfalls die notwendigen Befehle (lokal oder remote, beispielsweise per SSH/Console) aus, um die Transaktion über die auf der virtuellen Maschine befindliche Software in das jeweilige Blockchain-Protokoll-Netzwerk (z.B. das Bitcoin Netzwerk) zu broadcasten. Ist dies abgeschlossen oder wird ein time out erreicht, wird die virtuelle Maschine entsprechend wiederum in den Schlafzustand ("Hibernate") Versetzt.

In der bevorzugten Ausführungsform ist der (zeitlich) vorgelagerte Teil-Prozess (200) des Anlegens der segregierten Wallet-Umgebung ebenfalls vollständig automatisiert. Dieser Teilprozess beginnt damit, dass die Anforderung zur Erstellung einer neuen segregierten Wallet-Umgebung durch das "Front-End/API" in die "Front-side Database" geschrieben wird. Der "DMZ Controller" überträgt diese Anforderung analog dem vorstehend beschriebenen Prozess zur Durchführung von Signaturen in die "Back-side Database" welches letztlich den "Private Wallet Controller" (welcher regelmäßig nach vorliegenden Aufträgen in der "Back-side Database" prüft) dazu veranlasst, eine neue virtuelle Maschine durch clonen eines templates und starten der virtuellen Maschine veranlasst. Der "Private Wallet Controller" führt dann die notwendigen Konfigurationsarbeiten auf der virtuellen Maschine aus und erstellt das Paar bestehend aus dem "internal public key" und "internal private key" und überträgt den neu generierten "internal public key" in die "Back-side Database" und stoppt die virtuelle Maschine (hibernate). Der "DMZ Controller" überträgt den "internal public key" in die "Front-side Database". Liegt dieser Zustand mit dem "internal public key" in der "Front-side Database" vor, veranlasst dies die "Front-End/API" Software das "Master Password" anzufordern. Nachdem das "Master Password" über eine verschlüsselte Verbindung an das "Front-End/API" übertragen wurde, liest dieses den "internal public key" aus "Front-side Database" und verschlüsselt den Hashwert des "Master Password"'s. Das in dieser Weise verschlüsselte "Hashwert des Master Passwortes" (es handelt sich jeweilsum dessen Hashwert, nachfolgend wird mit "Master Password" hier deshalb stets dessen Hashwert gemeint) in die "Front-side Database". Mit Hilfe des "DMZ Controllers" wird dieses "Master Password" in die "Back-side Database" übertragen, wo der "Private Wallet Controller" das "Master Password" ausließest, bei Bedarf die zugehörige virtuelle Maschine gestartet und das "Master-Password" auf der virtuellen Maschine mit dem dortigen "internal private key" entschlüsselt.

Der "Private Wallet Controller" führt dann zudem diejenigen Befehle auf der virtuellen Maschine aus, um auf den installierten wallet clients (clients für das jeweilige Blockchain Protokoll beispielsweise Bitcoin Core für die Bitcoin Blockchain, wobei je nach Blockchain auch Eigenentwicklungen als Client dienen können) das "Master Password" als Teilschlüssel des generierten "Master File", welches wiederum als Wallet Password fungiert, zu setzen (und damit im Ergebnis den jeweiligen private key mit Hilfe dieses Passworts zu verschlüsseln).

Im nächsten Schritt wird ein zu dem jeweiligen (Blockchain-)Protokoll gehörigem private key ein public key, erfindungsgemäss "master public key" genannt, generiert. Dieser "master public key" wird vom "Private Wallet Controller" in die "Back-side database" übertragen und die virtuelle Maschine gestoppt (hibernate). Über den bereits mehrfach beschriebenen "Brücken-Mechanismus" des "DMZ Controllers" werden wird der "master public key" in die "Front-side database" übertragen. Der "Public Wallet Controller", welcher wie bereits beschrieben ebenfalls regelmässig die "Front-side database" nach vorliegenden Aufträgen überprüft, cloned bei vorliegen eines solchen Auftrags und dem "master public key" eine virtuelle Maschine, konfiguriert diese und setzt den "master public key" in der jeweiligen wallet client Software (wiederum z.B. Bitcoin core für die Bitcoin Blockchain als Beispiel oder auch selbst entwickelte clients) auf der virtuellen Maschine. Im Anschluss wird die virtuelle Maschine gestoppt (hibernate) und der Anlege-Prozess wird vom "Public Wallet Controller" als erfolgreich in der "Front-side Database" vermerkt.

Das erfindungsgemäße Verfahren und das konkrete Ausführungsbeispiel wird nachfolgend anhand von Zeichnungen schematisch dargestellt. Im Einzelnen zeigen:
- Fig. 1: Sequenzdiagramm der Durchführung von digitalen Signaturen;
- Fig. 2: Sequenzdiagramm des Anlegeprozesses eine individuellen Wallet;

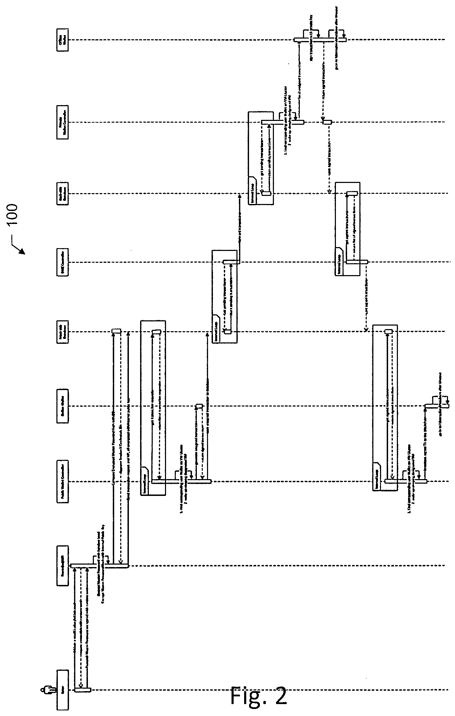

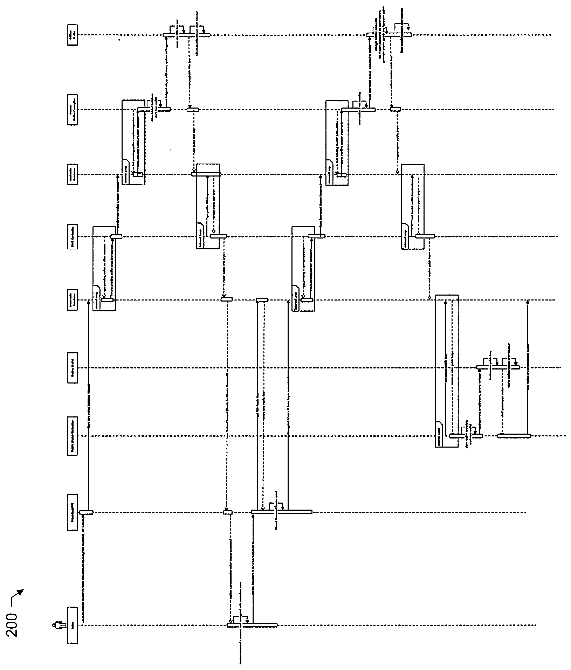

In der Figure 1 wird die beschriebene Ausführungsform zum automatisierten Erzeugen von digitalen Signaturen mit einem private key als Sequenzdiagramm darstellt und in Figure 2 wird der Prozess zum automatisierten erstellen aller notwendindigen Komponenten (insbesondere die Erstellung der jeweiligen public/private key Paare und die Erzeugung der virtuellen Maschinen/Containern) beschrieben.

## Patentansprüche

1. Rechnergestütztes Verfahren (100) zur Erzeugung von digitalen Signaturen, bei welchen der Private Key auf einem System gespeichert ist, welches sich in einem nicht-öffentlichen Netzwerk befindet und die Anforderung zur Erstellung einer digitalen Signatur von einem nicht-privaten Netzwerk aus erfolgt, **dadurch gekennzeichnet, dass** die digitale Signatur vollständig automatisiert erstellt wird, indem die digital zu signierenden Daten in das nicht-öffentliche Netzwerk übertragen werden und die errechnete digitale Signatur zurück in das nicht-private Netzwerk übertragen wird, ohne eine direkte Kommunikation zwischen den nicht-öffentlichen und öffentlichen Netzwerken zu erfordern, wobei die nicht öffentlichen und öffentlichen Netzwerke durch eine DMZ getrennt bleiben.

2. Verfahren (100) nach Anspruch 1, **dadurch gekennzeichnet, dass** die Daten, für welche die digitale Signatur berechnet werden soll, in einer Weise verschlüsselt werden, so dass diese nur innerhalb des nicht-öffentlichen Netzwerks wieder entschlüsselt werden können.

3. Verfahren (100) nach Anspruch 1 und 2, **dadurch gekennzeichnet, dass** der Private Key in einem nicht-öffentlichen Netzwerk verschlüsselt gespeichert wird.

4. Verfahren (100) nach Anspruch 1, 2 und 3, **dadurch gekennzeichnet, dass** für die Entschlüsselung des Private Keys Daten notwendig sind, welche nicht innerhalb des Systems dauerhaft gespeichert sind und als Teilschlüssel des Private Keys fungieren.

5. Verfahren (100) nach einem der vorherigen Ansprüche, **dadurch gekennzeichnet, dass** diejenigen Daten, die für die Entschlüsselung des Private Keys, welche an das System, auf welchem sich der Private Key befindet, bei der Übertragung in der Weise verschlüsselt sind, dass diese nur innerhalb des nicht-öffentlichen Netzwerks wieder entschlüsselt werden können.

6. Verfahren (100) nach einem der vorherigen Ansprüche, **dadurch gekennzeichnet, dass** der verschlüsselte Private Key nur dann entschlüsselt wird, wenn dieser für eine digitale Signatur notwendig ist.

7. Verfahren (100) nach einem der vorherigen Anspruche, **dadurch gekennzeichnet, dass** Anforderungen zur Erstellung einer digitalen Signatur mit Hilfe eines bestimmten Private Keys aus dem nicht-privaten Netzwerk per Interface an ein System übertragen werden, welches diese Aufträge vorhält und welches mit dem nicht-öffentlichen Netzwerk kommunizieren kann, um vorliegende Aufträge zu übertragen.

8. Verfahren (100) nach einem der vorherigen Ansprüche, **dadurch gekennzeichnet, dass** Anforderungen zur Erstellung einer digitalen Signatur mit Hilfe eines bestimmten Private Keys aus dem nicht-privaten Netzwerk per Interface an ein System übertragen werden, welches diese Aufträge vorhält und auf welches nur aus Richtung des nicht-öffentlichen Netzwerks zugegriffen werden kann, um vorliegende Aufträge abzurufen.

9. Verfahren (100) nach einem der vorherigen Ansprüche, **dadurch gekennzeichnet, dass** Anforderungen zur Erstellung einer digitalen Signatur mit Hilfe eines bestimmten Private Keys aus dem nicht-privaten Netzwerk per Interface an ein System übertragen werden, welches diese Aufträge vorhält und auf welches ein System zugreifen kann, welches sich nicht im nicht-privaten Netzwerk befindet, um vorliegende Aufträge abzurufen und wobei dieses System diese Aufträge über ein getrenntes Interface zum Abruf bereitstellt, auf welches aus dem nicht-öffentlichen Netzwerk zugegriffen werden kann.

10. Verfahren (100) nach einem der vorherigen Ansprüche, **dadurch gekennzeichnet, dass** Anforderungen zur Erstellung einer digitalen Signatur mit Hilfe eines bestimmten Private Keys aus dem nicht-privaten Netzwerk per Interface an ein System nur dann übertragen werden können, wenn zuvor die Berechtigung des Auslösers der Transaktion durch einen oder mehrere Identifikationsdienste positiv bestätigt wurde.

11. Verfahren (100) nach einem der vorherigen Ansprüche, **dadurch gekennzeichnet, dass** notwendige Transaktionsdaten außerhalb des nicht-öffentlichen Netzwerkes zusammengestellt werden und nur Transaktionsdaten an das nicht-öffentliche Netzwerk übertragen werden, wenn die Transaktionsdaten vollständig oder möglichst vollständig sind.

12. Verfahren (100) nach einem der vorherigen Ansprüche, **dadurch gekennzeichnet, dass** eine Software gekapselte Umgebungen aktivieren und deaktivieren kann und Befehle innerhalb dieser gekapselten Umgebung ausführen kann.

13. Verfahren (100) nach einem der vorherigen Ansprüche, **dadurch gekennzeichnet, dass** ein lokaler Node jedes unterstützten Blockchain-Protokolls als virtuelle Maschine betrieben wird und gekapselte Systeme, welche Transaktionsdaten zusammenstellen, auf diese zugreifen können.

14. Verfahren (100) nach einem der vorherigen Ansprüche, **dadurch gekennzeichnet, dass** ein Teil-Verfahren (200) zeitlich vorgelagert ist, welches eine gekapselte Umgebung in einem nicht-öffentlichen Netzwerk erstellt und ein oder mehrere Private/Public Key-Paare für die Nutzung in Blockchains generiert werden und ein intern verwendetes Private/Public Key-Paar generiert wird.

## Claims

1. A computer-based method (100) for generating digital signatures, wherein
the private key is stored on a system that is located in a non-public network and the request for generating a digital signature is made from a non-private network, **characterized in that** the digital signature is generated fully automated, by transmitting the data to be digitally signed into the non-public network and transmitting the computed digital signature back into the non-private network without requiring direct communication between the non-public and public networks, wherein the non-public and public networks remain separated by a DMZ.

2. Method (100) according to claim 1, **characterized in that** the data for which the digital signature is to be calculated is encrypted in a manner such that it can only be decrypted within the non-public network.

3. Method (100) according to claims 1 and 2, **characterized in that** the private key is stored in encrypted form in a non-public network.

4. Method (100) according to claims 1, 2 and 3, **characterized in that** data is required for decrypting the private key, which is not permanently stored within the system and acts as a subkey of the private key.

5. Method (100) according to one of the preceding claims, **characterized in that** the data for decrypting the private key, which is located on the system on which the private key is located, is encrypted during transmission in such a way that it can only be decrypted within the non-public network.

6. Method (100) according to one of the preceding claims, **characterized in that** the encrypted private key is decrypted only if it is necessary for a digital signature.

7. Method (100) according to one of the preceding claims, **characterized in that** requests for creating a digital signature using a specific private key are transmitted from the non-private network via an interface to a system which holds these requests and which can communicate with the non-private network in order to transmit existing requests.

8. Method (100) according to one of the preceding claims, **characterized in that** requests for creating a digital signature with the aid of a specific private key from the non-private network are transmitted via an interface to a system which holds these orders and which can only be accessed from the direction of the non-private network, in order to retrieve existing orders.

9. Method (100) according to one of the preceding claims, **characterized in that** requests for the generation of a digital signature using a particular private key from the non-private network are transmitted via an interface to a system which holds these orders and can be accessed by a system which is not located in the non-private network, in order to retrieve existing orders, wherein this system provides these orders for retrieval via a separate interface which can be accessed from the non-private network.

10. Method (100) according to one of the preceding claims, **characterized in that** requests for creating a digital signature with the aid of a particular private key from the non-private network can be transmitted via an interface to a system only if the authorization of the initiator of the transaction has been positively confirmed by one or more identification services.

11. Method (100) according to any of the preceding claims, **characterized by** gathering necessary transaction data outside the non-public network and transmitting only transaction data to the non-public network when the transaction data is complete or as complete as possible.

12. Method (100) according to one of the preceding claims, **characterized in that** software is capable of activating and deactivating encapsulated environments and executing commands within said encapsulated environment.

13. A method (100) according to one of the preceding claims, **characterized in that** a local node of each supported blockchain protocol is operated as a virtual machine and encapsulated systems that assemble transaction data can access it.

14. A method (100) according to one of the preceding claims, **characterized in that** it is preceded in time by a sub-method (200) which creates an encapsulated environment in a non-public network and generates one or more private/public key pairs for use in blockchains and generates an internally used private/public key pair.

## Revendications

1. Procédé (100) assisté par ordinateur de génération de signatures numériques, pour lesquelles la clé privée est enregistrée sur un système, lequel se trouve dans un réseau non public et la demande de création d'une signature numérique se fait depuis un réseau non privé, **caractérisé en ce que** la signature numérique est créée de manière entièrement automatisée, par le fait que les données à signer numériquement sont transférées dans le réseau non public et la signature numérique calculée est retransférée dans le réseau non privé sans exiger une communication directe entre les réseaux non publics et publics, dans lequel les réseaux non publics et publics restent séparés par une DMZ.

2. Procédé (100) selon la revendication 1, **caractérisé en ce que** les données, pour lesquelles la signature numérique doit être calculée, sont chiffrées de telle manière que celles-ci peuvent être déchiffrées uniquement à l'intérieur du réseau non public.

3. Procédé (100) selon la revendication 1 et 2, **caractérisé en ce que** la clé privée est enregistrée chiffrée dans un réseau non public.

4. Procédé (100) selon la revendication 1, 2 et 3, **caractérisé en ce que** pour le déchiffrage de la clé privée, des données sont nécessaires lesquelles ne sont pas enregistrées durablement à l'intérieur du système et fonctionnent comme des clés partielles de la clé privée.

5. Procédé (100) selon l'une quelconque des revendications précédentes, **caractérisé en ce que** les données, qui pour le déchiffrage de la clé privée, lesquelles au système, sur lequel se trouve la clé privée, sont chiffrées lors du transfert de telle manière que celles-ci peuvent être déchiffrées uniquement à l'intérieur du réseau non public.

6. Procédé (100) selon l'une quelconque des revendications précédentes, **caractérisé en ce que** la clé privée chiffrée est déchiffrée uniquement lorsque celle-ci est nécessaire pour une signature numérique.

7. Procédé (100) selon l'une quelconque des revendications précédentes, **caractérisé en ce que** des demandes de création d'une signature numérique à l'aide d'une clé privée déterminée sont transférées du réseau non privé par interface à un système, lequel présente ces ordres et lequel peut communiquer avec le réseau non public afin de transférer des ordres existants.

8. Procédé (100) selon l'une quelconque des revendications précédentes, **caractérisé en ce que** des demandes de création d'une signature numérique à l'aide d'une clé privée déterminée sont transférées du réseau non privé par interface à un système, lequel présente ces ordres et auquel il est possible d'accéder uniquement à partir de la direction du réseau non public afin de récupérer des ordres existants.

9. Procédé (100) selon l'une quelconque des revendications précédentes, **caractérisé en ce que** des demandes de création d'une signature numérique à l'aide d'une clé privée déterminée sont transférées du réseau non privé par interface à un système, lequel présente ces ordres et auquel un système peut accéder, lequel ne se trouve pas dans le réseau non privé afin de récupérer des ordres existants et dans lequel ce système met ces ordres à disposition pour récupération par le biais d'une interface séparée auquel il est possible d'accéder depuis le réseau non public.

10. Procédé (100) selon l'une quelconque des revendications précédentes, **caractérisé en ce que** des demandes de création d'une signature numérique à l'aide d'une clé privée déterminée peuvent être transférées du réseau non privé par interface à un système uniquement lorsque l'autorisation du déclencheur de la transaction a été confirmée positivement auparavant par un ou plusieurs services d'identification.

11. Procédé (100) selon l'une quelconque des revendications précédentes, **caractérisé en ce que** des données de transaction nécessaires en dehors du réseau non public sont compilées et des données de transaction sont transférées au réseau non public uniquement lorsque les données de transaction sont complètes ou aussi complètes que possible.

12. Procédé (100) selon l'une quelconque des revendications précédentes, **caractérisé en ce qu'**un logiciel peut activer et désactiver des environnements encapsulés et peut exécuter des instructions à l'intérieur de cet environnement encapsulé.

13. Procédé (100) selon l'une quelconque des revendications précédentes, **caractérisé en ce qu'**un nœud local de chaque protocole de chaîne de blocs supporté est exploité comme une machine virtuelle et des systèmes encapsulés, lesquels compilent des données de transaction, peuvent accéder à celles-ci.

14. Procédé (100) selon l'une quelconque des revendications précédentes, **caractérisé en ce qu'**un procédé partiel (200) est temporellement en amont, lequel créé un environnement encapsulé dans un réseau non public et une ou plusieurs paires clé privée/publique sont générées pour l'utilisation dans des chaînes de blocs et une paire clé privée/publique utilisée en interne est générée.
